# EUROPEAN PATENT APPLICATION

(11) **EP 1 840 600 A1**
(43) Date of publication of application: **03.10.2007**
(21) Application number: 06075730.9
(22) Date of filing: 29.03.2006
(51) Int. Cl.: G02B 5/02

(54) **A light reflector**

(71) Applicant: Nederlandse Organisatie voor toegepast-natuurwetenschappelijk Onderzoek TNO, 2628 VK Delft (NL)
(72) Inventor: van Nijnatten, Petrus Antonius, 5751 XH Deurne (NL); Gorter, Harrie, 5616 HZ Eindhoven (NL)
(74) Representative: van Loon, C.J.J.

(57) **Abstract**

The invention provides a light reflector comprising a light reflecting surface, which reflector comprises a layer of a porous inorganic material having a thickness in the range of from 0.1 to 100 mm, which inorganic material has a pore volume in the range of 2 to 80% and an average pore size in the range of from 100 nm to 50 µm. The invention further provides an apparatus comprising the reflector, and a method for preparing the reflector.

## Description

The invention relates to a diffuse light reflector, an apparatus comprising the light reflector and a method for preparing the light reflector.

Diffuse light reflectors are widely used in optical instruments and integrating spheres for measuring the amount and/or type of reflected light, and in light sources for reflecting the emitted light in an effective manner.

In conventional diffuse light reflectors use is made of, for instance, barium sulphate as the reflecting material. One of the drawbacks of the use of barium sulphate is, however, that barium sulphate adsorbs most of the ultraviolet light and has a high reflectance mostly in the wavelength region for visible light. as a result of which it cannot successfully be used in a number of applications, including integrating sphere measurements that require low noise levels in the UV and near-infrared regions.

To overcome said drawback light reflectors have been developed of which the reflecting material consists of polytetrafluoroethylene (PTFE). Such light reflectors are made from a pressurized and sintered block of PFTE from which subsequently the desired shape is machined. In this respect it is observed that PTFE is as such an expensive material, whereas the machining process as such is also costly. Another drawback is that it cannot be used in a high-temperature environment. In addition, it is observed that light reflectors made of PTFE are only able to reflect light having wavelengths in the range of from 200 to 2600 nm.

Surprisingly, it has been found that that these disadvantages can be dealt with when use of a layer of an inorganic material having a particular pore volume and average pore size.

Accordingly, the present invention relates to a light reflector comprising a light reflecting surface, which reflector comprises a layer of a porous inorganic material having a thickness in the range of from 0.1 to 100 mm, which inorganic material has a pore volume in the range of 2 to 80% and an average pore size in the range of from 100 nm to 50 µm.

The light reflector in accordance with the present invention has the advantages that it is made of an inexpensive material, it is easy to make, it is resistant to high temperatures, and it covers the much broader range of wavelengths.

Preferably, the porous inorganic material to be used in the light reflector according to the present invention has a pore volume in the range of from 10 to 60%, more preferably in the range of from 25 to 50%.

Suitably, the layer of the porous inorganic material is opaque.

Suitably. the layer of the porous inorganic material has a thickness in the range of 5 to 50 mm.

Preferably, the layer of the porous inorganic material is obtained by subjecting powder particles of a transparent inorganic material to a heat treatment, which powder particles have an average particle size of less than 50 µm.

Suitably, the inorganic material is selected from the group consisting of silica, alumina, magnesium fluoride, calcium fluoride, (alumino)silicates, magnesium aluminates, spinels and glass. The selection is based on having low absorption in the wavelength region of interest.

Preferably, the inorganic material has low optical absorption in the required wavelength region.

Preferably, the inorganic material comprises silica or calcium fluoride.

More preferably, the inorganic material comprises silica having a silicon dioxide content of more than 99% wt, based on total inorganic material. In the light reflector according to the invention suitably one side of the layer of the porous inorganic material forms at least part of the light reflecting surface. Preferably, the one side of the layer of the porous inorganic material forms the entire light reflecting surface.

Suitably, the layer of the porous inorganic material is applied to a holder.

The present invention also relates to an apparatus comprising the light reflector according to the present invention.

Suitably, such an apparatus comprises a lamp or a device for measuring reflected of transmitted light. Such an apparatus can suitably be used to determine the optical absorption or other optical properties of solid, liquid and gas samples. In addition, it can be used to obtain a highly efficient source for diffuse light.

The present invention further relates to a method for preparing the light reflector according to the present invention, which method comprises compressing powder particles of a transparent inorganic material under the application of heat in a mould, which powder particles have an average particle size of less than 50 µm.

Suitably, such a method introducing a suspension of powder particles of a transparent inorganic material into a mould, which powder particles have an average particle size of less than 50 µm, subjecting the suspension to a heat treatment, and recovering the reflector from the mould.

Preferably, in the method according to the present inventions the inorganic material is selected from the group consisting of silica, alumina, magnesium fluoride, calcium fluoride, (alumino)silicates, magnesium aluminates, spinels and glass.

Preferably, in the method according to the present invention the powder particles are subjected to a temperature in the range of from 600 to 1800 °C.

It will be understood by the skilled person that the light reflecting surface may have any shape required for the application concerned. The light reflecting surface may, for example, have the shape of a spherical cavity. or parts of such a cavity containing ports for detectors and incoming light beams. Suitably, the light reflecting surface has the shape of a hollow reflector for a light source.

Suitably, the light reflector forms an integrating sphere. In that case the integrating sphere comprises a hollow spherical cavity with one or more apertures (ports) made from the porous inorganic material,

A diffuse light reflector material to be used in accordance with the present invention can be made by means of number of ceramic processing procedures such as casting, pressing or plastic moulding.

The light reflecting material can for example be made by means of slib casting, pressure casting of vacuum casting in a porous mould:

A high purity fused silica (SiO₂) powder with a grain size smaller than 45 µm can be used as a raw material. Preferably, it is mixed with approximately 10 wt.% of a high purity fumed silica (SiO₂) with a surface area of approximately 50 m²/g. A slib is made from the powder mixture by mixing with an appropriate amount of liquid or fluid. The amount of liquid is such that a castable slib is obtained after milling. The liquid used is preferably water. If needed, additives can be used that influence the viscosity of the slib, to prevent flocculation, sedimentation or a weak cast. However in principle such additives are not strictly necessary. The slib obtained can then be milled to make a sufficiently deagglomerated casting slib. After milling, the slib can be cast into a porous mould of an appropriate shape. In the mould, a large amount of the liquid will be leaving the slurry and going into the pores of the mould, thus forming a layer of a wet powder compact on the surface of the mould. After sufficient casting time, an appropriate wall thickness will be obtained. The excess slurry can be removed and the shape can subsequently be dried for an appropriate time. After this initial drying in the mould, the shape is strong enough to be removed from the mould, and it will keep its shape. Subsequently, the dried shape can then be sintered in a furnace at a temperature between 800 and 1800°C and preferably between 900 and 1200°C.

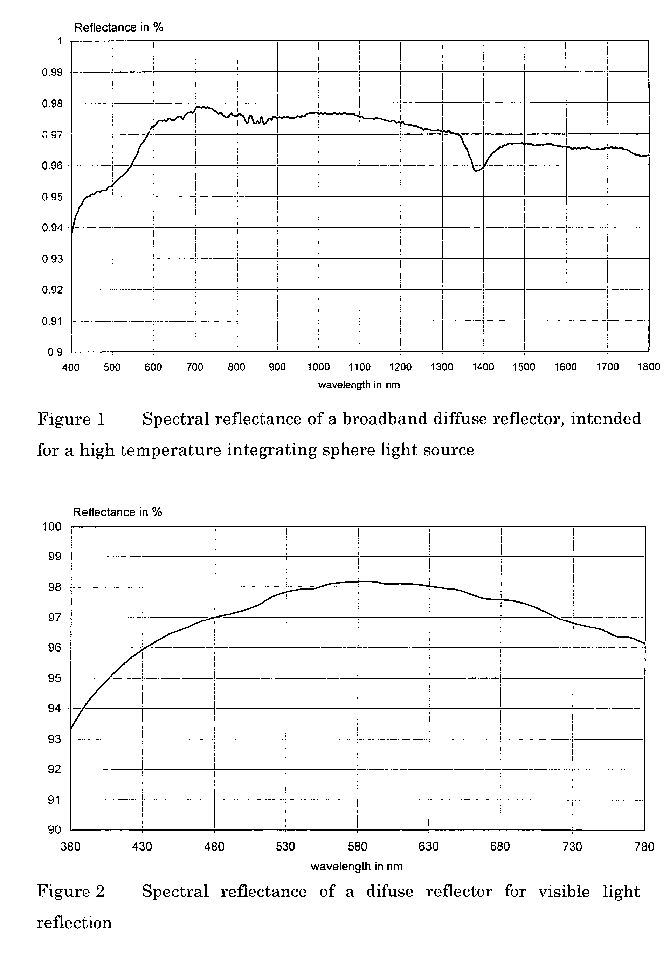

The light reflector that can thus be obtained comprises a layer of fused silica material having a thickness of 4-10. mm, which material had a pore volume of 25-35.%. Examples of reflectance curves of said reflector are shown in Figures 1 and 2.

Figure 1 shows the reflectance curve of a reflectance curve of a broadband light reflector based on the invention. The reflector was produced with commercially available cheep raw materials without additional purification. The decrease of the reflectance below 600 nm are due to absorption caused by the presence of contaminants. The small band around 1400 nm and the continuous decrease in reflectance at higher wavelengths are due to water contamination.

Figure 2 shows a reflectance curve of a light reflector based on the invention, optimized for maximum visible light reflectance.

## Claims

1. A light reflector comprising a light reflecting surface, which reflector comprises a layer of a porous inorganic material having a thickness in the range of from 0.1 to 100 mm, which inorganic material has a pore volume in the range of 2 to 80% and an average pore size in the range of from 100 nm to 50 µm.

2. A reflector according to claim 1, wherein the porous inorganic material has a pore volume in the range of from 10 to 60%.

3. A reflector according to claim 1 or 2, wherein the porous inorganic material has a pore volume in the range of from 25 to 50%.

4. A reflector according to any one of claims 1-3, wherein the layer of the porous inorganic material is opaque.

5. A reflector according to any one of claims 1-4, wherein the layer of the porous inorganic material has a thickness in the range of 5 to 50 mm.

6. A reflector according to any one of claims 1-5, wherein the layer of the porous inorganic material is obtained by subjecting powder particles of a transparent inorganic material to a heat treatment, which powder particles have an average particle size of less than 50 µm.

7. A reflector according to claim 6, wherein the inorganic material is selected from the group consisting of silica, alumina, magnesium fluoride, calcium fluoride, (alumino)silicates, magnesium aluminates, spinels and glass.

8. A reflector according to claim 7, wherein the inorganic material comprises silica or calcium fluoride.

9. A reflector according to claim 8, wherein the inorganic material comprises silica having a silicium dioxide content of more than 99% wt, based on total inorganic material.

10. A reflector according to any one of claims 1-9, wherein one side of the layer of the porous inorganic material forms at least part of the light reflecting surface.

11. A reflector according to claim 10, wherein the one side of the layer of the porous inorganic material forms the entire light reflecting surface.

12. A reflector according to any one of claims 1-11, wherein the layer of the porous inorganic material is applied to a holder.

13. An apparatus comprising a reflector according to any one of claims 1-12.

14. An apparatus according to claim 13, which apparatus comprises a lamp or a device for measuring reflected of transmitted light.

15. A method for preparing a reflector according to any one of claims 6-12 which method comprises compressing powder particles of a transparent inorganic material under the application of heat in a mould, which powder particles have an average particle size of less than 50 µm.

16. A method for preparing a reflector according to any one of claims 6-12 which method comprises introducing a suspension of powder particles of a transparent inorganic material into a mould, which powder particles have an average particle size of less than 50 µm, subjecting the suspension to a heat treatment, and recovering the reflector from the mould.

17. A method according to claim 15 or 16, wherein the inorganic material is selected from the group consisting of silica, alumina, magnesium fluoride, calcium fluoride, (alumino)silicates, magnesium aluminates, spinels and glass.

18. A method according to any one of claims 15-17, wherein the powder particles are subjected to a temperature in the range of from 600 to 1800 °C.
